# FASCICULE DE BREVET EUROPEEN

(11) **EP 1 719 361 B1**
(45) Date de publication et mention de la délivrance du brevet: **29.06.2011**
(21) Numéro de dépôt: 03796125.7
(22) Date de dépôt: 01.12.2003
(51) Int. Cl.: H04W 4/12

(54) **SYSTEME DE CREATION ET DE TRANSMISSION DE MESSAGES MULTIMEDIAS COMPORTANT UNE COMPOSANTE SONORE MODIFIEE**
SYSTEM ZUR MULTIMEDIANACHRICHT-ERZEUGUNG UND -ÜBERTRAGUNG DIE EINE GEÄNDERTE AUDIO KOMPONENTE ENTHÄLT
SYSTEM FOR THE CREATION AND TRANSMISSION OF MULTIMEDIA MESSAGES WITH A MODIFIED SOUND COMPONENT

(43) Date de publication de la demande: 08.11.2006
(73) Titulaire: FRANCE TELECOM, 75015 Paris (FR)
(72) Inventeur: EMERIT, Marc, 35000 RENNES (FR)
(74) Mandataire: Loisel, Bertrand
(86) Numéro de dépôt international: PCT/FR2003/003546
(87) Numéro de publication internationale: WO 2005/067328

(56) Documents cités:
- EP-A- 0 981 231
- WO-A-01/77939
- WO-A-98/25231
- US-A1- 2002 087 549
- US-A1- 2003 172 121

## Description

La présente invention concerne un système de création et de transmission sur un réseau de télécommunications, vers un appareil récepteur, de messages multimédias.

Un message multimédia est un message qui associe à un texte des sons et des images.

Il existe actuellement de nombreux outils de création de ce type de messages. Ils sont basés, pour la grande majorité, sur la réalisation d'un diaporama. L'utilisateur définit donc un enchaînement de diapositives, chacune d'elles étant composée d'une image, d'un texte et d'un son. Il définit de plus la durée d'apparition de chaque diapositive.

Les médias, sons et images, sont choisis dans une base de données pouvant se trouver sur un serveur ou dans l'ordinateur de l'utilisateur.

Les messages sont créés dans un format particulier. Les formats normalisés sont le MMS pour les mobiles et MIME ou SMIL pour Internet, mais il existe aussi des formats propriétaires.

Les messages sont ensuite compressés et envoyés à un serveur de contenus qui se charge de les mettre à disposition des destinataires, soit en les envoyant, soit en les publiant sur un site Web. La demande US2002/0087549 illustre un tel procédé de transmission.

On conçoit aisément qu'avec de tels outils, les possibilités de personnalisation d'un message par un utilisateur sont limitées.

Pour l'amateur averti ou le professionnel, il existe des outils sophistiqués permettant une véritable création multimédia. Ce sont des outils chers, souvent difficiles à mettre en oeuvre. De plus, ces outils ne permettent pas un envoi automatique du fichier créé sous forme de message multimédia. La demande WO01/77939 illustre un tel outil.

Le but de l'invention est donc d'offrir aux utilisateurs un système de création et de transmission de messages multimédias n'ayant pas ces limitations.

L'objet de l'invention est donc un système de création et de transmission sur un réseau de télécommunications vers au moins un appareil récepteur de messages multimédias, comportant des moyens de création par un utilisateur d'au moins un message multimédia sous forme d'un fichier numérique par assemblage et synchronisation de fichiers numériques d'éléments sonores et visuels préexistants, ces moyens de création étant connectés à un serveur de publication apte à recevoir chaque message multimédia créé et à le convertir dans un format compatible avec l'appareil récepteur et à le rendre accessible à celui-ci à travers le réseau de télécommunications, les moyens de création de messages multimédias comportant des moyens d'intégration d'effets de spatialisation sonore dans ces messages multimédias, ces effets de spatialisation sonore étant destinés à être appliqués aux fichiers numériques d'éléments sonores, le fichier numérique créé et transmis à un serveur de publication par les moyens de création incluant un fichier de description de scène, de sorte que le message multimédia comprend, d'une part, les fichiers numériques d'éléments sonores et, d'autre part, les effets sonores à appliquer, et les moyens de création étant connectés au serveur de publication apte à recevoir chaque message multimédia créé et à le convertir dans un format compatible avec les capacités de restitution sonore de l'appareil récepteur et à le rendre accessible à celui-ci à travers le réseau de télécommunications.

D'autres caractéristiques de l'invention sont énoncées dans les revendications dépendantes.

L'invention sera mieux comprise à la lumière de la description qui va suivre, faite en référence aux dessins annexés et dans lesquels :
- la figure 1 représente un schéma d'ensemble du système selon l'invention ;
- la figure 2 représente un ordinogramme du mode de fonctionnement du système selon l'invention ; et
- la figure 3 représente un mode de réalisation d'une interface du système selon l'invention.

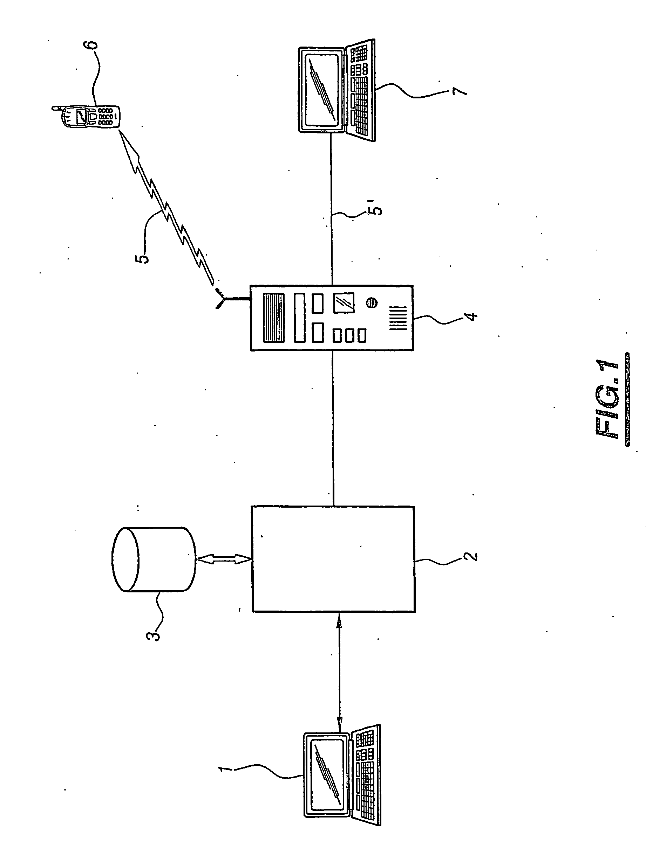

Le système de création et de transmission selon l'invention se compose, en référence à la figure 1, d'un outil de création 2. Cet outil est installé préférentiellement sur un serveur accessible aux terminaux 1 des utilisateurs et téléchargé automatiquement sur le terminal de l'utilisateur à la première utilisation. In peut aussi être pré installé sur le terminal.

L'outil de création 2 comporte un accès à une base de données 3 qui contient des fichiers médias. Ces fichiers médias sont des fichiers numériques contenant soit des sons, soit des images fixes ou animées.

L'outil, de création 2 comporte également une liaison numérique avec un serveur de publication 4, cette liaison servant à transmettre les messages multimédias créés par l'outil de création 2.

Le serveur de publication 4 est relié aux appareils récepteurs 6 et 7 par des réseaux de télécommunications 5 et 5'. A titre illustratif, le réseau de télécommunications 5 peut être un réseau de téléphonie mobile du type GSM ou UMTS et le réseau de télécommunications 5' un réseau de type Internet.

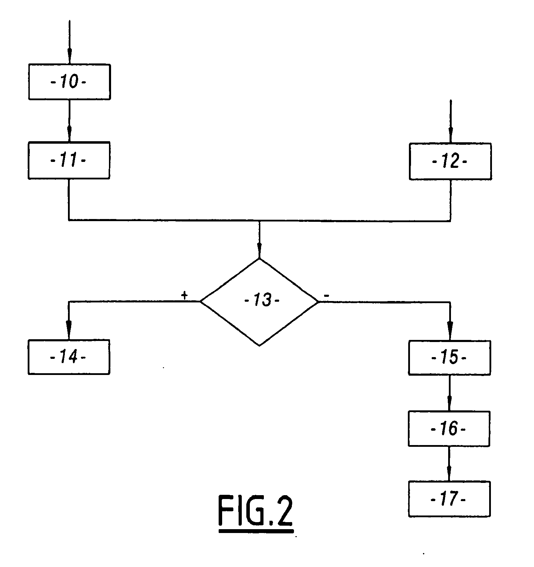

Le mode de fonctionnement du système selon l'invention va maintenant être explicité en référence à la figure 2.

L'étape de création 10 du message multimédia par l'utilisateur est donc effectuée à l'aide de l'outil de création 2.

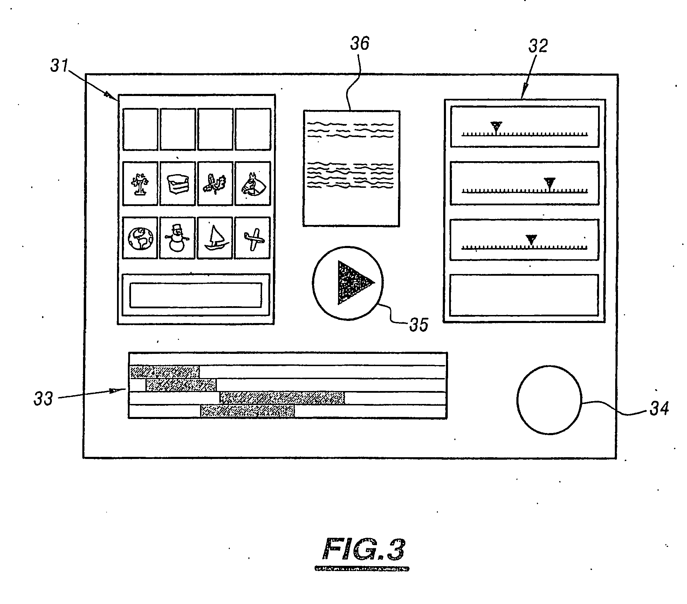

A titre illustratif, une interface de l'outil de création 2 est représentée en figure 3.

Dans la zone 31, l'utilisateur choisit les médias qu'il souhaite utiliser. Les médias sont des fichiers numériques sonores ou visuels. Afin de permettre une sélection aisée, ces médias sont triés par type et thème.

Une fois sélectionné, le média est déposé par l'utilisateur sur une ligne de temps dans la zone 33 de la table de mixage. Cette ligne de temps est une représentation visuelle du déroulement temporel du message. Cette représentation permet à l'utilisateur de définir précisément la temporisation de chaque média (temps de début et durée).

A l'aide des outils disponibles dans la zone 32, l'utilisateur peut créer différents effets sonores à appliquer aux médias sonores sélectionnés.

Ces effets sonores peuvent être des effets de déformation du son ou des effets de spatialisation sonore.

Les techniques de spatialisation sonore sont des procédés de traitement du signal audio appliqués à la simulation de phénomènes acoustiques et psycho acoustiques.

Ces techniques on pour objet de générer des signaux à diffuser sur haut-parleurs ou sur écouteurs, afin de donner à l'auditeur l'illusion auditive de sources sonores placées à telle ou telle position autour de lui, ou se déplaçant de telle position à telle autre position.

Les techniques de spatialisation sonore utilisent soit des procédés basés sur une approche physique visant à reproduire un champ sonore identique à l'original comme l'holophonie ou la technologie ambisonique, soit des procédés basés sur une approche psycho acoustique- cherchant à tirer partie des mécanismes de perception sonore pour simplifier le processus de reproduction comme la stéréophonie ou les technologies binaurales.

L'utilisateur peut donc appliquer de tels effets aux médias sonores.

Afin de pouvoir juger du résultat de son montage, l'utilisateur a à sa disposition un outil de rendu qu'il peut lancer grâce à la zone 35. Le message créé s'affiche alors dans la zone 36 pendant que les sons associés sont émis par les haut-parleurs du terminal de l'utilisateur.

Quand l'utilisateur est satisfait du résultat de son travail, il envoie alors en 11 (figure 2) le message multimédia créé au serveur de publication 4, grâce à la zone 34 de l'interface.

Le serveur de publication 4 reçoit en 12, en plus du fichier multimédia, les informations d'adresses des destinataires, informations fournies de manière classique par l'utilisateur qui a créé le message.

En fonction du message multimédia et des capacités techniques de l'appareil récepteur, le serveur de publication 4 détermine en 13 si le message multimédia peut être envoyé ou s'il doit être stocké en attente d'une lecture par le destinataire.

Si le message peut être envoyé, le serveur de publication 4 compresses si nécessaire, en 14 le fichier numérique créé par l'outil de création 2 en un fichier ayant un format compatible avec la transmission sur le réseau de télécommunications et les capacités techniques de l'appareil récepteur. Par exemple, les médias sonores et les effets sonores qui leur sont appliqués sont transformés en un fichier de sons stéréophoniques qu'un appareil téléphonique de type GSM peut lire et interpréter.

Si le message ne peut pas être envoyé, par exemple parce que l'appareil récepteur de dispose pas de capacité technique multimédia, le serveur de publication 4 envoie 15 un simple message texte à l'appareil récepteur pour avertir le destinataire qu'un message multimédia est à sa disposition.

Le destinataire se connecte 16 alors à l'adresse indiquée par le message et y envoie une requête pour télécharger en 17 le message multimédia.

Ainsi, grâce à un tel système selon l'invention, il est possible de créer et de transmettre des messages multimédias ayant des effets sonores.

Dans un mode de réalisation préféré de l'invention, le fichier numérique contenant le message multimédia créé par l'outil de création est dans un format de description de scène, à la norme MPEG-4 ISO/TEC/14496 par exemple.

Ainsi, ce fichier contient sous une forme structurée les liens et la synchronisation entre tous les médias utilisés, ainsi que les paramètres d'effets sonores et les scripts régissant les comportements des objets ou les interactions avec les utilisateurs.

Le serveur de publication 4 fusionne alors les fichiers médias en respectant les règles de synchronisation de la description de scène pour préparer un fichier multimédia compatible avec l'appareil récepteur, ou, si l'appareil récepteur est capable de lire le format de description de scène, le serveur de publication 4 se contente de regrouper et d'envoyer à l'appareil récepteur tous les fichiers nécessaires à l'exécution du message multimédia.

Dans une variante du mode de réalisation de l'invention, le téléchargement 17 du message multimédia se fait sous la forme d'un flux de données en continu (en anglais "streaming media").

Dans une autre variante du mode de réalisation, les messages multimédias comportent en outre des possibilités d'interactivité. En effet, les formats de description de scène comme le format MPEG-4 permettent d'inclure des scripts d'interactivité comme par exemple le déclenchement d'une vidéo quand le lecteur du message appuie sur une zone déterminée.

L'invention permet ainsi de créer et de transmettre des messages multimédias sophistiqués de façon simple et aisée.

## Revendications

1. Système de création et de transmission sur un réseau de télécommunications (5,5') vers au moins un appareil récepteur (6,7) de messages multimédias, comportant des moyens de création (2) par un utilisateur d'au moins un message multimédia sous forme d'un fichier numérique par assemblage et synchronisation de fichiers numériques (3) d'éléments sonores et visuels préexistants, **caractérisé en ce que** :
les moyens de création (2) de messages multimédias comportent des moyens d'intégration d'effets de spatialisation sonore dans ces messages multimédias, lesdits effets de spatialisation sonore étant destinés à être appliqués aux fichiers numériques d'éléments sonores ;
le fichier numérique créé et transmis à un serveur de publication (4) par les moyens de création (2) inclut un fichier de description de scène, de sorte que le message multimédia comprend, d'une part, les fichiers numériques d'éléments sonores et, d'autre part, les effets sonores à appliquer ; et
les moyens de création sont connectés au serveur de publication (4) apte à recevoir chaque message multimédia créé et à le convertir dans un format compatible avec les capacités de restitution sonore de l'appareil récepteur et à le rendre accessible à celui-ci à travers le réseau de télécommunications (5, 5').

2. Système de création et de transmission selon la revendication 1, **caractérisé en ce que** les moyens de création (2) comportent au moins une interface permettant à l'utilisateur de manipuler des fichiers visuels et sonores et de les synchroniser dans le temps.

3. Système de création et de transmission selon l'une des revendications 1 ou 2, **caractérisé en ce que** les moyens de création (2) comportent des moyens de rendu permettant à l'utilisateur de visualiser et d'entendre le message créé.

4. Système de création et de transmission selon l'une quelconque des revendications précédentes, **caractérisé en ce que** le serveur de publication (4) est adapté pour transmettre à l'appareil récepteur (6, 7) le message multimédia sous forme d'un message électronique à travers le réseau de télécommunications (5, 5').

5. Système de création et de transmission selon l'une des revendications 1 à 3, **caractérisé en ce que** le serveur de publication (4) est adapté pour transmettre à l'appareil récepteur (6, 7) à travers le réseau de télécommunications (5, 5') un message pour avertir l'utilisateur destinataire qu'un message multimédia est disponible pour être téléchargé.

6. Système de création et de transmission selon la revendication 5, **caractérisé en ce que** l'appareil récepteur (6, 7) comporte des moyens adaptés pour envoyer une requête de téléchargement du message multimédia audit serveur de publication (4).

7. Système de création et de transmission selon l'une des revendications 5 ou 6, **caractérisé en ce que** le serveur de publication (4) comporte des moyens de transmission du message multimédia sous forme de flux de données en continu.

8. Système de création et de transmission selon l'une quelconque des revendications précédentes, **caractérisé en ce que** le message multimédia comporte en outre des scripts d'interactivité.

## Claims

1. System for the creation and transmission over a telecommunications network (5, 5') to at least one receiver apparatus (6, 7) of multimedia messages, comprising means (2) of creation by a user of at least one multimedia message in the form of a digital file by assembling and synchronizing digital files (3) of preexisting sound and visual elements, **characterized in that**:
the multimedia message creation means (2) comprise means for integrating sound spatialization effects into these multimedia messages, said sound spatialization effects being intended to be applied to the digital files of sound elements;
the digital file created and transmitted to a publication server (4) by the creation means (2) includes a scene description file, so that the multimedia message comprises, on the one hand, the digital files of sound elements and, on the other hand, the sound effects to be applied; and
the creation means are connected to the publication server (4) able to receive each multimedia message created and to convert it into a format compatible with the sound restitution capabilities of the receiver apparatus and to render it accessible to the latter across the telecommunications network (5, 5').

2. Creation and transmission system according to Claim 1, **characterized in that** the creation means (2) comprise at least one interface allowing the user to manipulate visual and sound files and to synchronize them in time.

3. Creation and transmission system according to one of Claims 1 or 2, **characterized in that** the creation means (2) comprise rendition means allowing the user to view and to hear the message created.

4. Creation and transmission system according to any one of the preceding claims, **characterized in that** the publication server (4) is adapted for transmitting to the receiver apparatus (6, 7) the multimedia message in the form of an electronic message across the telecommunications network (5, 5').

5. Creation and transmission system according to one of Claims 1 to 3, **characterized in that** the publication server (4) is adapted for transmitting to the receiver apparatus (6, 7) across the telecommunications network (5, 5') a message to warn the addressee user that a multimedia message is available to be downloaded.

6. Creation and transmission system according to Claim 5, **characterized in that** the receiver apparatus (6, 7) comprises means adapted for dispatching a request to download the multimedia message to the said publication server (4).

7. Creation and transmission system according to one of Claims 5 or 6, **characterized in that** the publication server (4) comprises means for transmitting the multimedia message in the form of a continuous data stream.

8. Creation and transmission system according to any one of the preceding claims, **characterized in that** the multimedia message furthermore comprises interactivity scripts.

## Patentansprüche

1. System zur Erzeugung und zur Übertragung von Multimedia-Mitteilungen über ein Telekommunikationsnetzwerk (5, 5') an mindestens ein Empfangsgerät (6, 7), das Einrichtungen (2) zur Erzeugung, durch einen Benutzer, mindestens einer Multimedia-Mitteilung in Form einer digitalen Datei durch Zusammenfügung und Synchronisation digitaler Dateien (3) von vorab existierenden Klang- und Bild-Elementen aufweist, **dadurch gekennzeichnet, dass**:
die Einrichtungen (2) zur Erzeugung von Multimedia-Mitteilungen Einrichtungen zum Integrieren von Raumklang-Effekten in diese Multimedia-Mitteilungen aufweisen, wobei die Raumklang-Effekte dazu bestimmt sind, an die digitalen Dateien von Klang-Elementen angewendet zu werden;
wobei die erzeugte und von den Erzeugungseinrichtungen (2) an einen Veröffentlichungsserver (4) übertragene digitale Datei eine Szenenbeschreibungsdatei enthält, so dass die Multimedia-Mitteilung einerseits die digitalen Dateien von Klang-Elementen und andererseits die anzuwendenden Klang-Effekte enthält; und
die Erzeugungseinrichtungen mit dem Veröffentlichungsserver (4) verbunden sind, der jede erzeugte Multimedia-Mitteilung empfangen und sie in ein Format umwandeln kann, das mit den Fähigkeiten der Klang-Wiedergabe des Empfangsgeräts kompatibel ist, und sie für dieses über das Telekommunikationsnetzwerk (5, 5') zugänglich machen kann.

2. Erzeugungs- und Übertragungssystem nach Anspruch 1, **dadurch gekennzeichnet, dass** die Erzeugungseinrichtungen (2) mindestens eine Schnittstelle aufweisen, die es dem Benutzer ermöglicht, Bild- und Klang-Dateien zu behandeln und sie zeitlich zu synchronisieren.

3. Erzeugungs- und Übertragungssystem nach einem der Ansprüche 1 oder 2, **dadurch gekennzeichnet, dass** die Erzeugungseinrichtungen (2) Wiedergabeeinrichtungen aufweisen, die es dem Benutzer ermöglichen, die erzeugte Mitteilung sichtbar zu machen und zu hören.

4. Erzeugungs- und Übertragungssystem nach einem der vorhergehenden Ansprüche, **dadurch gekennzeichnet, dass** der Veröffentlichungsserver (4) geeignet ist, um die Multimedia-Mitteilung in Form einer elektronischen Mitteilung über das Telekommunikationsnetzwerk (5, 5') an das Empfangsgerät (6, 7) zu übertragen.

5. Erzeugungs- und Übertragungssystem nach einem der Ansprüche 1 bis 3, **dadurch gekennzeichnet, dass** der Veröffentlichungsserver (4) geeignet ist, um über das Telekommunikationsnetzwerk (5, 5') eine Mitteilung an das Empfangsgerät (6, 7) zu übertragen, um den Zielbenutzer darüber zu benachrichtigen, dass eine Multimedia-Mitteilung verfügbar ist, um heruntergeladen zu werden.

6. Erzeugungs- und Übertragungssystem nach Anspruch 5, **dadurch gekennzeichnet, dass** das Empfangsgerät (6, 7) Einrichtungen aufweist, die geeignet sind, um eine Aufforderung zum Herunterladen der Multimedia-Mitteilung an den Veröffentlichungsserver (4) zu senden.

7. Erzeugungs- und Übertragungssystem nach einem der Ansprüche 5 oder 6, **dadurch gekennzeichnet, dass** der Veröffentlichungsserver (4) Einrichtungen zur Übertragung der Multimedia-Mitteilung in Form eines kontinuierlichen Datenstroms aufweist.

8. Erzeugungs- und Übertragungssystem nach einem der vorhergehenden Ansprüche, **dadurch gekennzeichnet, dass** die Multimedia-Mitteilung außerdem Interaktivitäts-Skripte aufweist.
